(19) Europäisches Patentamt
European Patent Office
Office européen des brevets

(11) **EP 3 115 170 B1**

(12) **EUROPEAN PATENT SPECIFICATION**

(45) Date of publication and mention
of the grant of the patent:
**29.06.2022   Bulletin 2022/26**

(21) Application number: **15757827.9**

(22) Date of filing: **06.03.2015**

(51) International Patent Classification (IPC):
*B29C 44/44* (2006.01)       *B29C 67/20* (2006.01)
*C08J 9/228* (2006.01)       *B29K 23/00* (2006.01)
*C08J 9/232* (2006.01)

(52) Cooperative Patent Classification (CPC):
**B29C 44/445; C08J 9/232;** C08J 2323/02;
C08J 2323/06; C08J 2323/12; C08J 2323/14;
C08J 2353/00

(86) International application number:
**PCT/JP2015/056712**

(87) International publication number:
**WO 2015/133619 (11.09.2015 Gazette 2015/36)**

(54) **METHOD FOR MANUFACTURING POLYOLEFIN RESIN IN-MOLD-FOAM-MOLDED ARTICLE**

VERFAHREN ZUR HERSTELLUNG EINES IN EINER FORM SCHAUMGEFORMTEN POLYOLEFINHARZGEGENSTANDES

PROCÉDÉ POUR LA FABRICATION D'ARTICLE EN RÉSINE DE POLYOLÉFINE MOULÉ PAR EXPANSION EN MOULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **07.03.2014   JP 2014045413**

(43) Date of publication of application:
**11.01.2017   Bulletin 2017/02**

(73) Proprietor: **Kaneka Corporation**
**Osaka-shi, Osaka 530-8288 (JP)**

(72) Inventors:
• **SAMESHIMA, Masahiko**
**Settsu-shi**
**Osaka 566-0072 (JP)**

• **TOBIMATSU, Yuki**
**Settsu-shi**
**Osaka 566-0072 (JP)**

(74) Representative: **Vossius & Partner**
**Patentanwälte Rechtsanwälte mbB**
**Siebertstrasse 3**
**81675 München (DE)**

(56) References cited:
**JP-A- S5 191 971       JP-A- S51 147 567**
**JP-A- S60 166 442       US-A- 4 644 013**
**US-A- 4 968 723**

• **DATABASE WPI Week 197705 Thomson Scientific, London, GB; AN 1977-08548Y -& JP S51 147567 A (ASAHI DOW LTD) 17 December 1976 (1976-12-17)**

**Description**

Technical Field

The present invention relates to a method for manufacturing a polyolefin resin in-mold-foam-molded article according to any one of claims 1 to 4.

Background Art

As a method for manufacturing polyolefin resin foam-molded articles, an in-mold foam molding method is widely employed. In the method, polyolefin resin pre-foamed particles are packed in a molding cavity in a mold, then steam is fed into the molding cavity to thermally foam and fuse the pre-foamed particles, and consequently a foam-molded article having an intended shape is obtained.

In the foam-molded article molded by the in-mold foam molding method, the air present in cells of pre-foamed resin particles is foamed and scattered and the cells are filled with steam during steam heating process. When such a molded article is allowed to stand at normal temperature after molding, the air in cells is shrunk and the steam is condensed as the temperature of the molded article decreases. Accordingly, the cells are rapidly shrunk to cause a large deformation of the foam-molded article in some cases. In particular, foam-molded articles made from polyethylene resin having high flexibility or from polypropylene resin having a high expansion ratio markedly exhibit the phenomenon.

On this account, an aging treatment is typically performed after molding of a polyolefin resin in-mold-foam-molded article. In the aging treatment, a foam-molded article is allowed to stand in a high temperature atmosphere not higher than the melting temperature of a resin for a predetermined period of time. This treatment expands air and vaporizes water once condensed, in the cells. Accordingly, the pressure in the cells is increased, the shape of the foam-molded article is restored, and the steam in the cells is replaced with air.

For example, Patent Document 1 discloses an aging method. In the method, a polyolefin resin in-mold-foam-molded article having a volume that is 70 to 110% of a mold volume after ejection is allowed to stand in a temperature environment that is 25 to 55°C lower than the melting point of a substrate resin.

Patent Document 2 discloses another aging method. In the method, an initial temperature for aging is high but set at a temperature that is lower than the melting temperature of a foam-molded article by 15°C or more and then the aging temperature is set at a temperature that is lower than the initial temperature by 10°C but is between 75 to 85°C.

Patent Document 3 discloses still another aging method. In the method, a foam-molded article having a high expansion ratio is subjected to primary aging at 40 to 60°C for a day and then is subjected to secondary aging at a temperature higher than the primary aging temperature by 10°C to 30°C.

Patent Document 4 discloses an aging method at a certain temperature that is determined according to the density.

Patent Document 5 discloses yet another method for producing a foam-molded article.

Citation List

Patent Literature

Patent Document 1: JP-A No. S60-166422
Patent Document 2: JP-A No. 2000-212320
Patent Document 3: JP-A No. S63-47128
Patent Document 4: JP-A No. S60-90744
Patent Document 5: JP S51-147567 A

Summary of Invention

Technical Problem

The aging in the method for manufacturing polyolefin resin in-mold-foam-molded articles requires that a foam-molded article is allowed to stand in a high temperature atmosphere at 60 to 85°C, which is lower than the melting temperature of a resin, for a predetermined period of time, and Patent Documents 1 to 4 also disclose various aging methods.

Each method is for stably restoring the shape of a foam-molded article in a short period of time. However, when a foam-molded article is taken out of a drying room or an aging room in a high temperature condition to the outside environment, such a phenomenon in which the foam-molded article is shrunk again due to a difference in temperature between the drying or aging room and the outside environment may be observed.

When the outside air temperature is normal temperature, the shape of a foam-molded article is slowly restored. It is needless to say that it takes a long period of time to stabilize the foam-molded article from this state to stable dimensions. When the outside air temperature is much lower, a foam-molded article is excessively shrunk, and this reduces the productivity.

Solution to Problem

The inventors of the present invention have repeated intensive studies in order to solve the problems, consequently have found that in a method for manufacturing polyolefin resin in-mold-foam-molded articles molded by in-mold foam molding in which polyolefin resin pre-foamed particles are packed in a mold, the pre-foamed particles are foamed by heating, and the pre-foamed particles are fused, excess shrinkage of the foamed article after being aged can be suppressed by subjecting the foam-molded article after ejection from the mold to primary aging at 70°C or more and 85°C or less to restore the shape and then by subjecting the resulting foam-molded article to secondary aging at 35°C or more and 55°C or less, wherein the article is transferred as quickly as possible from an aging room controlled at the first aging temperature to another aging room controlled at the second aging temperature, and have completed the present invention.

Advantageous Effects of Invention

According to the manufacturing method of the present invention, the shrinkage of a highly flexible foam-molded article can be suppressed when the foam-molded article is made from polypropylene resin pre-foamed particles having an expansion ratio of 30 or more, or from polyethylene resin pre-foamed particles having an expansion ratio of 18 or more, for example. The manufacturing method of the present invention more markedly provides the effect of suppressing the shrinkage of a foam-molded article as the outside air temperature (outside environmental temperature) decreases.

Brief Description of Drawings

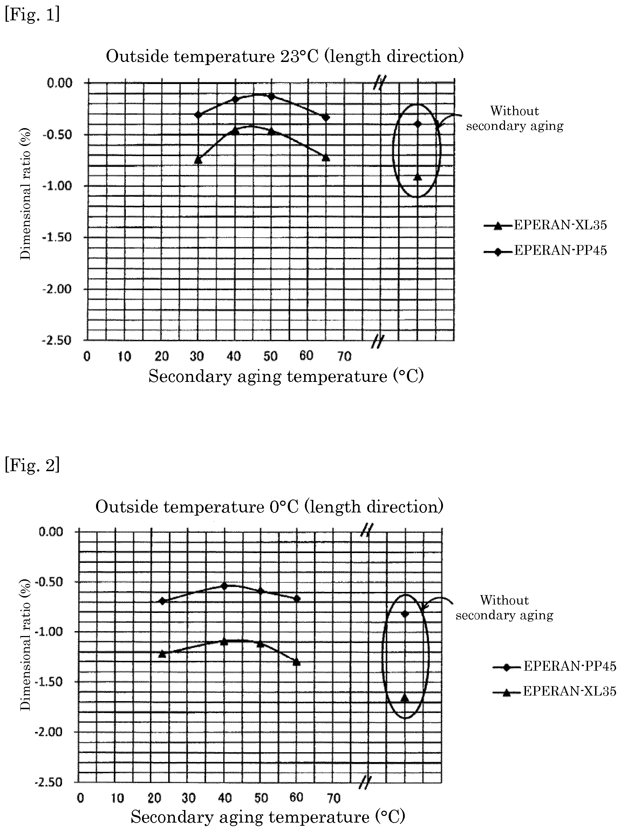

Fig. 1 is a graph based on dimensional ratios in Examples 1 to 4 and Comparative Examples 1 to 6 shown in Tables 1 and 2. The graph shows the relation between the dimensional ratio calculated from dimension A and dimension B and the secondary aging temperature, where the dimension A is a dimension in the length direction determined in such a way that a foam-molded article immediately after in-mold foam molding is subjected to primary aging at 75°C, next is subjected to secondary aging at a predetermined temperature, then is taken out into an environment at an outside air temperature (outside environmental temperature) of 23°C, and, after 4 hours, is subjected to measurement; and the dimension B is a dimension in the length direction determined in such a way that the foam-molded article is allowed to stand in a thermostatic chamber at 23°C for 48 hours or more and, after stabilization of the dimensions, is subjected to measurement. The diamonds in the graph show the result of EPERAN-PP45, which is polypropylene resin pre-foamed particles having an expansion ratio of 45, and the triangles show the result of EPERAN-XL35, which is polyethylene resin pre-foamed particles having an expansion ratio of 35.

Fig. 2 is a graph based on dimensional ratios in Examples 5 to 8 and Comparative Examples 7 to 12 shown in Tables 3 and 4, where the outside air temperature (outside environmental temperature) in Fig. 1 was changed to 0°C.

Fig. 3 is a graph based on dimensional ratios in Examples 9 to 12 and Comparative Examples 13 to 18 shown in Tables 5 and 6, where the outside air temperature (outside environmental temperature) in Fig. 1 was changed to -20°C.

Fig. 4 is a graph based on Table 1, Table 2, Table 7, and Table 8 and showing the relation between the secondary aging temperature and the dimensional ratio in Examples 1 to 4, 13, 14, 19, and 20 and Comparative Examples 1 to 6 where the outside environmental temperature was 23°C.

Fig. 5 is a graph based on Table 3, Table 4, Table 7, and Table 8 and showing the relation between the secondary aging temperature and the dimensional ratio in Examples 5 to 8, 15, 16, 21, and 22 and Comparative Examples 7 to 12 where the outside environmental temperature was 0°C.

Fig. 6 is a graph based on Table 5, Table 6, Table 7, and Table 8 and showing the relation between the secondary aging temperature and the dimensional ratio in Examples 9 to 12, 17, 18, 23, and 24 and Comparative Examples 13 to 18 where the outside environmental temperature was -20°C.

Description of Embodiments

The in-mold foam molding method in the method for manufacturing a polyolefin resin in-mold-foam-molded article of the present invention is exemplified by the following method: polyolefin resin pre-foamed particles are packed in a molding cavity that is composed of two molds and can be closed but cannot be hermetically sealed; a heating medium such as steam is used to perform molding at a steam pressure of about 0.10 to 0.40 MPa (G) for a heating time of about 3 to 60 seconds to fuse the polyolefin resin pre-foamed beads together; next, the molds are cooled with water; and then the molds are opened to give a polyolefin resin in-mold-foam-molded article.

In the method for manufacturing an in-mold-foam-molded article of the present invention, the foam-molded article after the in-mold foam molding is ejected from molds, and then is aged in an aging room at a controlled temperature for a predetermined period of time. The manufacturing method of the present invention is characterized in that, for the aging, the foam-molded article is subjected to primary aging at 70°C or more and 85°C or less to restore the shape thereof, and then is subjected to secondary aging at 35°C or more and 55°C or less.

In the method for manufacturing an in-mold-foam-molded article of the present invention, the air in cells is foamed and the water once condensed is vaporized by the primary aging at 70°C or more and 85°C or less. Accordingly, the shape of the foam-molded article can be restored while the pressure in the cells is increased.

If the primary aging temperature is less than 70°C, the flow rate of air into cells is likely to decrease to extend the aging time. If the primary aging temperature is more than 85°C, the dimensions of the foam-molded article are likely to be shortened. As for polyethylene resins, if the primary aging temperature is less than 70°C, pre-foamed particles having a higher expansion ratio requires a longer aging time until the dimensions are stabilized, and thus the productivity is likely to be reduced. If the primary aging temperature is more than 85°C, the thermal shrinkage is likely to be larger.

The inventors of the present invention have performed the following study: for example, a plate-like mold having a length of 400 mm, a width of 300 mm, and a height of 60 mm that is substantially the same as that in examples described later was used to mold in-mold-foam-molded articles; the in-mold-foam-molded articles were subjected to primary aging at temperatures of 65°C to 90°C (six levels at intervals of 5°C) for 18 hours; and each dimensional ratio (determined in accordance with the dimensional ratio in examples described later) was determined. As a result, the polypropylene resin and the polyethylene resin are likely to give larger dimensional ratios (absolute value) at 65°C and 90°C than those at 70°C to 85°C. The thermal shrinkage is large at 90°C, and thus the improvement effect of reducing the dimensional ratio (absolute value) should not be achieved even by secondary aging. At 65°C, a slight improvement effect should be achieved by secondary aging, but the secondary aging requires a long period of time to cause a problem in terms of productivity.

The primary aging temperature may be changed within the range during a primary aging period or may be constant, but is preferably constant at a high temperature from the viewpoint of shortening the aging time.

In the method for manufacturing an in-mold-foam-molded article of the present invention, the primary aging treatment is preferably completed in a condition in which the dimensions of the foam-molded article are stabilized.

Although the completion timing of the primary aging treatment may be determined by measuring a dimension of each foam-molded article to be aged, the aging time until a dimension of a foam-molded article becomes the same as that of, for example, a foam-molded article that has been aged at 75°C for 24 hours is preferably, previously measured, and the completion timing of the aging treatment is preferably set on the basis of the measured aging time. More specifically, for a common box-like foam-molded article having a thickness of 50 mm and made from a polypropylene resin, the dimensions of the foam-molded article are substantially stabilized after 24 hours or more according to a primary aging temperature of 70 to 80°C. Similarly, for polyethylene resins, the dimensions of a foam-molded article are substantially stabilized after 36 hours or more according to an aging temperature of 70 to 80°C. However, the primary aging time greatly depends on the shape, thickness, or the like of a foam-molded article, and may be extremely longer or shorter than the typical primary aging time, in some cases.

The primary aging treatment is preferably completed in a condition in which the dimensions of the foam-molded article are stabilized because the in-mold-foam-molded article after secondary aging obtains stable qualities, in combination with the secondary aging in certain conditions. Stabilization in dimension is so defined as to start at a moment when a dimension change amount is 0.1 mm or less per hour during the primary aging treatment, if such a dimensional change amount continues for 10 hours or more.

In the method for manufacturing an in-mold-foam-molded article of the present invention, secondary aging at 35°C or more and 55°C or less enables suppression of excess shrinkage of a foam-molded article after being aged. The secondary aging temperature is more preferably 40°C or more and 50°C or less.

If the secondary aging temperature is less than 35°C, the air inflow rate into cells decreases, thus sufficient air cannot be infiltrated into cells, and the effect of suppressing shrinkage is likely to become poor. If the secondary aging temperature is more than 55°C, the temperature difference from that of the outside environment is large, and thus the effect of suppressing shrinkage is likely to become poor.

The secondary aging temperature may be changed within the range during a secondary aging period or may be constant, but is preferably constant in order to stably achieve gradual cooling effect.

The secondary aging time in the present invention is preferably 3 hours or more. The secondary aging time varies with the shape, thickness, or the like of a foam-molded article, and secondary aging for about 1 hour may achieve sufficient effect in some cases. For example, for polypropylene resins having an expansion ratio of 30 to 60, particularly 45 to 60, the secondary aging time is preferably 3 hours or more according to a secondary aging temperature of 35 to 55°C. Similarly, for polyethylene resins having an expansion ratio of 18 to 60, particularly 35 to 60, the secondary aging time is preferably 3 hours or more according to a secondary aging temperature of 35 to 55°C.

If the secondary aging time is less than 3 hours, the effect of suppressing the shrinkage of a foam-molded article is unlikely to be achieved. The upper limit of the secondary aging time may be any value, but the secondary aging time is desirably 8 hours or less. If the secondary aging time is more than 8 hours, the productivity is markedly reduced, and such a condition is undesirable.

As described above, when polyolefin resin pre-foamed particles, for example, the above-mentioned polypropylene resin pre-foamed particles having particular expansion ratio or the above-mentioned polyethylene resin pre-foamed particles having a particular expansion ratio are used, the secondary aging time is more preferably 3 hours or more and 8 hours or less.

In the manufacturing method of the present invention, the foam-molded article after the secondary aging is taken out into an outside environment. The foam-molded article may be allowed to stand in the outside environment for a predetermined period of time.

According to the manufacturing method of the present invention, the shrinkage of a highly flexible foam-molded article can be suppressed when the foam-molded article is made from polypropylene resin pre-foamed particles having an expansion ratio of 30 or more or from polyethylene resin pre-foamed particles having an expansion ratio of 18 or more.

Meanwhile, for the foam-molded article made from polypropylene resin pre-foamed particles having an expansion ratio of less than 30 or from polyethylene resin pre-foamed particles having an expansion ratio of less than 18, the shrinkage of such a poorly flexible foam-molded article is small when the foam-molded article is taken out into an outside environment, and thus the intended effect is likely to be small.

The manufacturing method of the present invention more markedly provides the effect of suppressing the shrinkage of a foam-molded article as the outside air temperature (outside environmental temperature) decreases.

In the present invention, the aging treatment is preferably performed immediately after the ejection from a mold in order to prevent a foam-molded article from being shrunk after the ejection from a mold, but may be performed in such a manner that a certain standby time is provided, a plurality of foam-molded articles produced during the standby time are stocked and are concurrently transferred to an aging room to be subjected to the aging treatment.

In the present invention, the aging treatment at a first aging temperature and the aging treatment at a second aging temperature are performed in special aging rooms separately. The foam-molded article is transferred as quickly as possible from an aging room controlled at the first aging temperature to another aging room controlled at the second aging temperature.

The polyolefin resin used in the present invention is a polymer containing an olefin monomer in an amount of 75% by weight or more.

Specific examples of the olefin monomer used in the present invention include $\alpha$-olefins having 2 to 12 carbon atoms, such as ethylene, propylene, butene-1, isobutene, pentene-1, 3-methyl-butene-1, hexene-1, 4-methyl-pentene-1, 3,4-dimethyl-butene-1, heptene-1, 3-methyl-hexene-1, octene-1, and decene-1. These olefin monomers may be used singly or in combination of two or more of them.

Specific examples of additional monomers copolymerizable with the olefin monomer used in the present invention include cyclic olefins such as cyclopentene, norbornene, and 1,4,5,8-dimethano-1,2,3,4,4a,8,8a,6-octahydronaphthalene; and dienes such as 5-methylene-2-norbornene, 5-ethylidene-2-norbornene, 1,4-hexadiene, methyl-1,4-hexadiene, and 7-methyl-1,6-octadiene. These additional copolymerizable monomers may be used singly or in combination of two or more of them.

Specific examples of the polyolefin resin used in the present invention include polyethylene resins having an ethylene unit as the main component, such as high-density polyethylenes, medium-density polyethylenes, low-density polyethylenes, and linear low-density polyethylenes; and polypropylene resins having a propylene unit as the main component.

These polyolefin resins may be used singly or in combination of two or more of them.

The polypropylene resin used in the present invention may be any polypropylene resin that contains propylene as the main component of monomers, and is exemplified by propylene homopolymers, $\alpha$-olefin-propylene random copolymers, and $\alpha$-olefin-propylene block copolymers. These polymers may be used singly or in combination of two or more of them.

In particular, polypropylene resins containing ethylene as the $\alpha$-olefin that is a copolymerizable monomer component are easily available and have excellent process formability, and thus can be preferably used in the in-mold foam molding. Specifically, ethylene-propylene random copolymers are more preferred.

The polyethylene resin used in the present invention is exemplified by ethylene homopolymers, ethylene-$\alpha$-olefin random copolymers, ethylene-$\alpha$-olefin block copolymers, low-density polyethylenes, high-density polyethylenes, and linear low-density polyethylenes. Here, the $\alpha$-olefin is exemplified by $\alpha$-olefins having 3 to 15 carbon atoms, and these $\alpha$-olefins may be used singly or in combination of two or more of them.

Of these polyethylene resins, ethylene-$\alpha$-olefin block copolymers containing $\alpha$-olefins other than ethylene in an amount of 1 to 10% by weight or linear low-density polyethylenes (linear polyethylene copolymers) exhibit good foamability, and thus can be preferably used in the in-mold foam molding.

By subjecting the in-mold-foam-molded article to the primary aging, the vapor filled in cells during molding is replaced with air, and the amount of the air in cells is increased. By the subsequent secondary aging, the amount of air in cells is increased, and the difference in temperature from an outside environmental temperature is reduced. Accordingly, excess re-shrinkage can be suppressed. At this time, the vapor in cells passes through the resin wall of the cells and is dissipated into the outside of the cells, whereas from the outside of the cells, air passes through the resin wall and infiltrates into the cells. In this case, the passage of vapor and air through the resin wall of cells is supposed to be in accordance with a gas passage fundamental equation ($dm/dt = (QA/h)(P_0 - P)$, where m is a material transfer mass, Q is a gas permeability, A is a resin wall surface area, h is a resin wall thickness, $P_0$ is an external pressure, t is a transfer time, and P is a cell internal pressure). Although the cell internal pressure is supposed to vary with a gas permeability in the gas passage fundamental equation, the polyolefin resins, particularly the polyethylene resins and the polyolefin resins are supposed to have substantially the same gas permeability. Thus, in the aging conditions in the present invention, substantially the same tendency is supposed to be exhibited even when various polyolefin resins (particularly polyethylene resins or polyolefin resins) are used, and the advantageous effects of the present invention should be achieved.

The polyolefin resin used in the present invention can be used as a polyolefin resin composition, as necessary, further containing additives including:

cell nucleating agents such as talc;
stabilizers such as antioxidants, metal deactivators, phosphorus processing stabilizers, ultraviolet absorbers, ultraviolet stabilizers, fluorescent brightening agents, and metallic soaps; and
other additives such as crosslinking agents, chain transfer agents, lubricants, plasticizers, fillers, reinforcements, inorganic pigments, organic pigments, conductivity improving agents, flame retardancy improving agents, and surfactant or polymer antistatic agents.

The polyolefin resin composition used in the present invention is typically, previously molded and processed into polyolefin resin particles so as to be easily used in pre-foaming, by melting and kneading a polyolefin resin, as necessary together with the additive, with an extruder, a kneader, a Banbury mixer, rolls, or the like into an intended particle shape such as a column shape, an elliptical shape, a spherical shape, a cubic shape, and a rectangular parallelepiped shape.

The method of manufacturing the polyolefin resin pre-foamed particles used in the present invention is not limited to particular methods. For example, polyolefin resin particles are dispersed in a dispersion medium in the presence of a foaming agent together with a dispersant and the like in a closed container; the whole is heated to a predetermined foaming temperature under pressure while the foaming agent is infiltrated into the resin particles; then the aqueous dispersion in the closed container is discharged into a low pressure area while the temperature and pressure in the container are maintained at constant values; and consequently the particles are foamed. Such steps which are also referred to as a depressurization foaming method are preferred.

In the depressurization foaming method, the heating temperature in the closed container is preferably not lower than the temperature that is 25°C lower than the melting point of polyolefin resin particles, and not higher than the temperature that is 25°C higher than the melting point of polyolefin resin particles, and is more preferably not lower than the temperature that is 15°C lower than the melting point of polyolefin resin particles, and not higher than the temperature that is 15°C higher than the melting point of polyolefin resin particles.

The contents are heated at the temperature and pressurized to infiltrate a foaming agent into the polyolefin resin particles, then one end of the closed container is opened to discharge the polyolefin resin particles into a lower pressure atmosphere than that in the closed container, and consequently polyolefin resin pre-foamed particles can be manufactured.

When the polyolefin resin pre-foamed particles in the present invention are manufactured, the foaming agent used may be any agent, and is exemplified by aliphatic hydrocarbons such as propane, isobutane, n-butane, isopentane, and n-pentane; inorganic gases such as air, nitrogen, and carbon dioxide; and water. These foaming agents may be used singly or in combination of two or more of them.

Although the expansion ratio of the polyolefin resin pre-foamed particles in the present invention is not limited to particular values, the shrinkage of a highly flexible foam-molded article is large, and thus the advantageous effects of the present invention are likely to be achieved when the expansion ratio is 18 to 60. In addition, a foam-molded article is likely to have higher flexibility as the expansion ratio becomes large, and thus the advantageous effects of the present invention are likely to be achieved as the expansion ratio becomes higher within the above range. In particular, for the polyethylene resin pre-foamed particles, the advantageous effects of the present invention are more likely to be achieved when the expansion ratio is 18 to 60, preferably 35 to 60. For the polypropylene resin pre-foamed particles, the advantageous effects of the present invention are more likely to be achieved when the expansion ratio is 30 to 60, preferably 45 to 60.

Examples

The present invention will next be described in further detail with reference to examples of the present invention, but the present invention is not intended to be limited to the following examples.

In examples and comparative examples, the following pre-foamed particles were used.

- Polypropylene resin pre-foamed particles:
  EPERAN-PP45 (SBS45, manufactured by Kaneka Corporation, prepared by allowing an ethylene-propylene random copolymer resin [MFR = 7.0 g/10 min., a melting point of 145°C] to be foamed at an expansion ratio of 45)
- Polyethylene resin pre-foamed particles:
  EPERAN-XL35 (XL35, manufactured by Kaneka Corporation, prepared by allowing an ethylene-$\alpha$-olefin block copolymer [MFR = 2.0 g/10 min., a melting point of 122°C] to be foamed at an expansion ratio of 35)

The evaluations in examples and comparative examples were performed by the following procedures.

<Dimensional evaluation>

An in-mold-foam-molded article obtained was subjected to secondary aging, then taken out into the outside environment, and allowed to stand for 4 hours. The dimension in the length direction (dimension A) of the resulting foam-molded article was measured by using vernier calipers (manufactured by Mitutoyo Corporation).

Next, the foam-molded article was allowed to stand in a thermostatic chamber at 23°C for 48 hours or more. After the dimensions were stabilized, the dimension in the length direction (dimension B) was measured by using vernier calipers.

The dimension A and the dimension B were used to calculate the dimensional ratio in accordance with the following equation, and the result was rounded off to two decimal places.

$$\text{Dimensional ratio (\%)} = (\text{dimension A} - \text{dimension B})/\text{dimension B} \times 100$$

A larger dimensional ratio indicates smaller shrinkage after the secondary aging.

(Example 1)

[Manufacture of in-mold-foam-molded article]

As the pre-foamed resin particles, EPERAN-PP45, which is polypropylene resin pre-foamed particles having an expansion ratio of 45, was used.

In a pressure-resistant container, pressurized air was infiltrated into EPERAN-PP45 to make EPERAN-PP45 have an internal pressure of about 0.1 MPa (G), and then the EPERAN-PP45 was packed in a plate-like mold [a length of 400 mm, a width of 300 mm, a height of 60 mm] installed on KD345 molding machine (manufactured by Daisen Co., Ltd.).

Next, the steam pressure was increased to 0.26 MPa (G) over 12 seconds. In this condition, the mold was heated for 5 seconds to fuse the pre-foamed particles together and was cooled with water for 130 seconds. The content was ejected from the mold to give an in-mold-foam-molded article.

[Aging of foam-molded article]

The obtained in-mold-foam-molded article was allowed to stand in a thermostatic chamber at 75°C for 24 hours as the primary aging, then was allowed to stand in a thermostatic chamber at 50°C for 5 hours as the secondary aging, and was taken out into an outside environment at 23°C.

The in-mold-foam-molded article was allowed to stand in the outside environment for 4 hours, and then was allowed to stand in a thermostatic chamber at 23°C.

The dimensional ratio at the outside environmental temperature is shown in Table 1.

(Example 2)

The aging was performed by the same operation as in Example 1 except that the secondary aging temperature was changed to 40°C in [Aging of foam-molded article].

The dimensional ratio at the outside environmental temperature is shown in Table 1.

(Comparative Example 1)

The aging was performed by the same operation as in Example 1 except that no secondary aging was performed in [Aging of foam-molded article].

The dimensional ratio at the outside environmental temperature is shown in Table 1.

(Comparative Example 2)

The aging was performed by the same operation as in Example 1 except that the secondary aging temperature was changed to 65°C in [Aging of foam-molded article].

The dimensional ratio at the outside environmental temperature is shown in Table 1.

(Comparative Example 3)

The aging was performed by the same operation as in Example 1 except that the secondary aging temperature was changed to 30°C in [Aging of foam-molded article].

The dimensional ratio at the outside environmental temperature is shown in Table 1.

[Table 1]

| | Example 1 | Example 2 | Comparative Example 1 | Comparative Example 2 | Comparative Example 3 |
|---|---|---|---|---|---|
| Pre-foamed particles | EPERAN-PP45 | | | | |
| Outside air temperature (°C | 23 | | | | |
| Primary aging temperature (°C) | 75 | | | | |
| Secondary aging temperature (°C) | 50 | 40 | - | 65 | 30 |
| Dimensional ratio (%) | -0.13 | -0.15 | -0.40 | -0.33 | -0.31 |

(Example 3)

[Manufacture of in-mold-foam-molded article]

As the pre-foamed resin particles, EPERAN-XL35, which is polyethylene resin pre-foamed particles having an expansion ratio of 35, was used.

EPERAN-XL35 was packed in a plate-like mold [a length of 400 mm, a width of 300 mm, a height of 60 mm] installed on KD345 molding machine (manufactured by DAISEN).

Next, the steam pressure was increased to 0.11 MPa (G) over 5 seconds. In this condition, the mold was heated for 12 seconds to fuse the pre-foamed particles together and was cooled with water for 140 seconds. The content was ejected from the mold to give an in-mold-foam-molded article.

[Aging of foam-molded article]

The obtained in-mold-foam-molded article was allowed to stand in a thermostatic chamber at 75°C for 36 hours as the primary aging, then was allowed to stand in a thermostatic chamber at 50°C for 5 hours as the secondary aging, and was taken out into an outside environment at 23°C. After 4 hours of the taking out into the outside environment, the in-mold-foam-molded article was allowed to stand in a thermostatic chamber at 23°C.
The dimensional ratio at the outside environmental temperature is shown in Table 2.

(Example 4)

The aging was performed by the same operation as in Example 3 except that the secondary aging temperature was changed to 40°C in [Aging of foam-molded article].
The dimensional ratio at the outside environmental temperature is shown in Table 2.

(Comparative Example 4)

The aging was performed by the same operation as in Example 3 except that no secondary aging was performed in [Aging of foam-molded article].
The dimensional ratio at the outside environmental temperature is shown in Table 2.

(Comparative Example 5)

The aging was performed by the same operation as in Example 3 except that the secondary aging temperature was changed to 65°C in [Aging of foam-molded article].
The dimensional ratio at the outside environmental temperature is shown in Table 2.

(Comparative Example 6)

The aging was performed by the same operation as in Example 3 except that the secondary aging temperature was changed to 30°C in [Aging of foam-molded article].
The dimensional ratio at the outside environmental temperature is shown in Table 2.

[Table 2]

|  | Example 3 | Example 4 | Comparative Example 4 | Comparative Example 5 | Comparative Example 6 |
|---|---|---|---|---|---|
| Pre-foamed particles | EPERAN-XL35 | | | | |
| Outside air temperature (°C | 23 | | | | |
| Primary aging temperature (°C) | 75 | | | | |
| Secondary aging temperature (°C) | 50 | 40 | - | 65 | 30 |
| Dimensional ratio (%) | -0.46 | -0.45 | -0.91 | -0.72 | -0.74 |

(Example 5)

The aging was performed by the same operation as in Example 1 except that the outside environmental temperature was changed to 0°C in [Aging of foam-molded article].
The dimensional ratio at the outside environmental temperature is shown in Table 3.

(Example 6)

The aging was performed by the same operation as in Example 1 except that the secondary aging temperature was changed to 40°C and the outside environmental temperature was changed to 0°C in [Aging of foam-molded article].

The dimensional ratio at the outside environmental temperature is shown in Table 3.

(Comparative Example 7)

The aging was performed by the same operation as in Example 1 except that no secondary aging was performed and the outside environmental temperature was changed to 0°C in [Aging of foam-molded article].
The dimensional ratio at the outside environmental temperature is shown in Table 3.

(Comparative Example 8)

The aging was performed by the same operation as in Example 1 except that the secondary aging temperature was changed to 60°C and the outside environmental temperature was changed to 0°C in [Aging of foam-molded article].
The dimensional ratio at the outside environmental temperature is shown in Table 3.

(Comparative Example 9)

The aging was performed by the same operation as in Example 1 except that the secondary aging temperature was changed to 23°C and the outside environmental temperature was changed to 0°C in [Aging of foam-molded article].
The dimensional ratio at the outside environmental temperature is shown in Table 3.

[Table 3]

|  | Example 5 | Example 6 | Comparative Example 7 | Comparative Example 8 | Comparative Example 9 |
|---|---|---|---|---|---|
| Pre-foamed particles | EPERAN-PP45 | | | | |
| Outside air temperature (°C) | 0 | | | | |
| Primary aging temperature (°C) | 75 | | | | |
| Secondary aging temperature (°C) | 50 | 40 | - | 60 | 23 |
| Dimensional ratio (%) | -0.59 | -0.54 | -0.82 | -0.66 | -0.69 |

(Example 7)

The aging was performed by the same operation as in Example 3 except that the outside environmental temperature was changed to 0°C in [Aging of foam-molded article].
The dimensional ratio at the outside environmental temperature is shown in Table 4.

(Example 8)

The aging was performed by the same operation as in Example 3 except that the secondary aging temperature was changed to 40°C and the outside environmental temperature was changed to 0°C in [Aging of foam-molded article].
The dimensional ratio at the outside environmental temperature is shown in Table 4.

(Comparative Example 10)

The aging was performed by the same operation as in Example 3 except that no secondary aging was performed and the outside environmental temperature was changed to 0°C in [Aging of foam-molded article].
The dimensional ratio at the outside environmental temperature is shown in Table 4.

(Comparative Example 11)

The aging was performed by the same operation as in Example 3 except that the secondary aging temperature was changed to 60°C and the outside environmental temperature was changed to 0°C in [Aging of foam-molded article].

The dimensional ratio at the outside environmental temperature is shown in Table 4.

(Comparative Example 12)

The aging was performed by the same operation as in Example 3 except that the secondary aging temperature was changed to 23°C and the outside environmental temperature was changed to 0°C in [Aging of foam-molded article].
The dimensional ratio at the outside environmental temperature is shown in Table 4.

[Table 4]

|  | Example 7 | Example 8 | Comparative Example 10 | Comparative Example 11 | Comparative Example 12 |
|---|---|---|---|---|---|
| Pre-foamed particles | EPERAN-XL35 | | | | |
| Outside air temperature (°C | 0 | | | | |
| Primary aging temperature (°C) | 75 | | | | |
| Secondary aging temperature (°C) | 50 | 40 | - | 60 | 23 |
| Dimensional ratio (%) | -1.12 | -1.09 | -1.65 | -1.29 | -1.22 |

(Example 9)

The aging was performed by the same operation as in Example 1 except that the outside environmental temperature was changed to -20°C in [Aging of foam-molded article].
The dimensional ratio at the outside environmental temperature is shown in Table 5.

(Example 10)

The aging was performed by the same operation as in Example 1 except that the secondary aging temperature was changed to 40°C and the outside environmental temperature was changed to -20°C in [Aging of foam-molded article].
The dimensional ratio at the outside environmental temperature is shown in Table 5.

(Comparative Example 13)

The aging was performed by the same operation as in Example 1 except that no secondary aging was performed and the outside environmental temperature was changed to -20°C in [Aging of foam-molded article].
The dimensional ratio at the outside environmental temperature is shown in Table 5.

(Comparative Example 14)

The aging was performed by the same operation as in Example 1 except that the secondary aging temperature was changed to 60°C and the outside environmental temperature was changed to -20°C in [Aging of foam-molded article].
The dimensional ratio at the outside environmental temperature is shown in Table 5.

(Comparative Example 15)

The aging was performed by the same operation as in Example 1 except that the secondary aging temperature was changed to 23°C and the outside environmental temperature was changed to -20°C in [Aging of foam-molded article].
The dimensional ratio at the outside environmental temperature is shown in Table 5.

[Table 5]

| | Example 9 | Example 10 | Comparative Example 13 | Comparative Example 14 | Comparative Example 15 |
|---|---|---|---|---|---|
| Pre-foamed particles | EPERAN-PP45 | | | | |
| Outside air temperature (°C) | -20 | | | | |
| Primary aging temperature (°C) | 75 | | | | |
| Secondary aging temperature (°C) | 50 | 40 | - | 60 | 23 |
| Dimensional ratio (%) | -0.71 | -0.71 | -1.02 | -0.82 | -0.92 |

(Example 11)

The aging was performed by the same operation as in Example 3 except that the outside environmental temperature was changed to -20°C in [Aging of foam-molded article].

The dimensional ratio at the outside environmental temperature is shown in Table 6.

(Example 12)

The aging was performed by the same operation as in Example 3 except that the secondary aging temperature was changed to 40°C and the outside environmental temperature was changed to -20°C in [Aging of foam-molded article].

The dimensional ratio at the outside environmental temperature is shown in Table 6.

(Comparative Example 16)

The aging was performed by the same operation as in Example 3 except that no secondary aging was performed and the outside environmental temperature was changed to -20°C in [Aging of foam-molded article].

The dimensional ratio at the outside environmental temperature is shown in Table 6.

(Comparative Example 17)

The aging was performed by the same operation as in Example 3 except that the secondary aging temperature was changed to 60°C and the outside environmental temperature was changed to -20°C in [Aging of foam-molded article].

The dimensional ratio at the outside environmental temperature is shown in Table 6.

(Comparative Example 18)

The aging was performed by the same operation as in Example 3 except that the secondary aging temperature was changed to 23°C and the outside environmental temperature was changed to -20°C in [Aging of foam-molded article].

The dimensional ratio at the outside environmental temperature is shown in Table 6.

[Table 6]

| | Example 11 | Example 12 | Comparative Example 16 | Comparative Example 17 | Comparative Example 18 |
|---|---|---|---|---|---|
| Pre-foamed particles | EPERAN-XL35 | | | | |
| Outside air temperature (°C) | -20 | | | | |
| Primary aging temperature (°C) | 75 | | | | |
| Secondary aging temperature (°C) | 50 | 40 | - | 60 | 23 |

(continued)

|  | Example 11 | Example 12 | Comparative Example 16 | Comparative Example 17 | Comparative Example 18 |
|---|---|---|---|---|---|
| Dimensional ratio (%) | -1.47 | -1.47 | -2.34 | -1.70 | -1.90 |

(Example 13)

[Manufacture of in-mold-foam-molded article]

An in-mold-foam-molded article was obtained in the same manner as in Example 1.

[Aging of foam-molded article]

The in-mold-foam-molded article ejected from the mold was allowed to stand at 23°C for 1 hour. The in-mold-foam-molded article was then allowed to stand in a thermostatic chamber at 75°C for 24 hours as the primary aging. Next, the in-mold-foam-molded article was quickly transferred into a thermostatic chamber at 55°C and was allowed to stand in the thermostatic chamber at 55°C for 5 hours as the secondary aging. The in-mold-foam-molded article was then taken out into an outside environment at 23°C.
The in-mold-foam-molded article was allowed to stand in the outside environment for 4 hours and then was allowed to stand in a thermostatic chamber at 23°C.
The time until the dimensions are stabilized in the primary aging in this system was previously determined to be 24 hours.
The dimensional ratio at the outside environmental temperature is shown in Table 7.

(Example 14)

The aging was performed by the same operation as in Example 13 except that the secondary aging temperature was changed to 35°C in [Aging of foam-molded article].
The dimensional ratio at the outside environmental temperature is shown in Table 7.

(Example 15)

The aging was performed by the same operation as in Example 13 except that the secondary aging temperature was 55°C and the outside environmental temperature was changed to 0°C in [Aging of foam-molded article].
The dimensional ratio at the outside environmental temperature is shown in Table 7.

(Example 16)

The aging was performed by the same operation as in Example 13 except that the secondary aging temperature was changed to 35°C and the outside environmental temperature was changed to 0°C in [Aging of foam-molded article].
The dimensional ratio at the outside environmental temperature is shown in Table 7.

(Example 17)

The aging was performed by the same operation as in Example 13 except that the secondary aging temperature was 55°C and the outside environmental temperature was changed to -20°C in [Aging of foam-molded article].
The dimensional ratio at the outside environmental temperature is shown in Table 7.

(Example 18)

The aging was performed by the same operation as in Example 13 except that the secondary aging temperature was changed to 35°C and the outside environmental temperature was changed to -20°C in [Aging of foam-molded article].
The dimensional ratio at the outside environmental temperature is shown in Table 7.

[Table 7]

| | Example 13 | Example 14 | Example 15 | Example 16 | Example 17 | Example 18 |
|---|---|---|---|---|---|---|
| Pre-foamed particles | EPERAN-PP45 | | | | | |
| Outside air temperature (°C) | 23 | | 0 | | -20 | |
| Primary aging temperature (°C) | 75 | | | | | |
| Secondary aging temperature (°C) | 55 | 35 | 55 | 35 | 55 | 35 |
| Dimensional ratio (%) | -0.20 | -0.22 | -0.61 | -0.59 | -0.75 | -0.78 |

(Example 19)

[Manufacture of in-mold-foam-molded article]

An in-mold-foam-molded article was obtained in the same manner as in Example 3.

[Aging of foam-molded article]

The obtained in-mold-foam-molded article was allowed to stand in a thermostatic chamber at 75°C for 36 hours as the primary aging. The in-mold-foam-molded article was then quickly transferred into a thermostatic chamber at 55°C and was allowed to stand in the thermostatic chamber at 55°C for 5 hours as the secondary aging.
Next, the in-mold-foam-molded article was taken out into an outside environment at 23°C. After 4 hours of the taking out into the outside environment, the in-mold-foam-molded article was allowed to stand in a thermostatic chamber at 23°C.
The time until the dimensions are stabilized in the primary aging in this system was previously determined to be 36 hours.
The dimensional ratio at the outside environmental temperature is shown in Table 8.

(Example 20)

The aging was performed by the same operation as in Example 19 except that the secondary aging temperature was changed to 35°C in [Aging of foam-molded article].
The dimensional ratio at the outside environmental temperature is shown in Table 8.

(Example 21)

The aging was performed by the same operation as in Example 19 except that the secondary aging temperature was 55°C and the outside environmental temperature was changed to 0°C in [Aging of foam-molded article].
The dimensional ratio at the outside environmental temperature is shown in Table 8.

(Example 22)

The aging was performed by the same operation as in Example 19 except that the secondary aging temperature was changed to 35°C and the outside environmental temperature was changed to 0°C in [Aging of foam-molded article].
The dimensional ratio at the outside environmental temperature is shown in Table 8.

(Example 23)

The aging was performed by the same operation as in Example 19 except that the secondary aging temperature was 55°C and the outside environmental temperature was changed to -20°C in [Aging of foam-molded article].
The dimensional ratio at the outside environmental temperature is shown in Table 8.

(Example 24)

The aging was performed by the same operation as in Example 19 except that the secondary aging temperature was changed to 35°C and the outside environmental temperature was changed to -20°C in [Aging of foam-molded article].

The dimensional ratio at the outside environmental temperature is shown in Table 8.

[Table 8]

|  | Example 19 | Example 20 | Example 21 | Example 22 | Example 23 | Example 24 |
|---|---|---|---|---|---|---|
| Pre-foamed particles | EPERAN-XL35 | | | | | |
| Outside air temperature (°C) | 23 | | 0 | | -20 | |
| Primary aging temperature (°C) | 75 | | | | | |
| Secondary aging temperature (°C) | 55 | 35 | 55 | 35 | 55 | 35 |
| Dimensional ratio (%) | -0.52 | -0.60 | -1.20 | -1.10 | -1.55 | -1.60 |

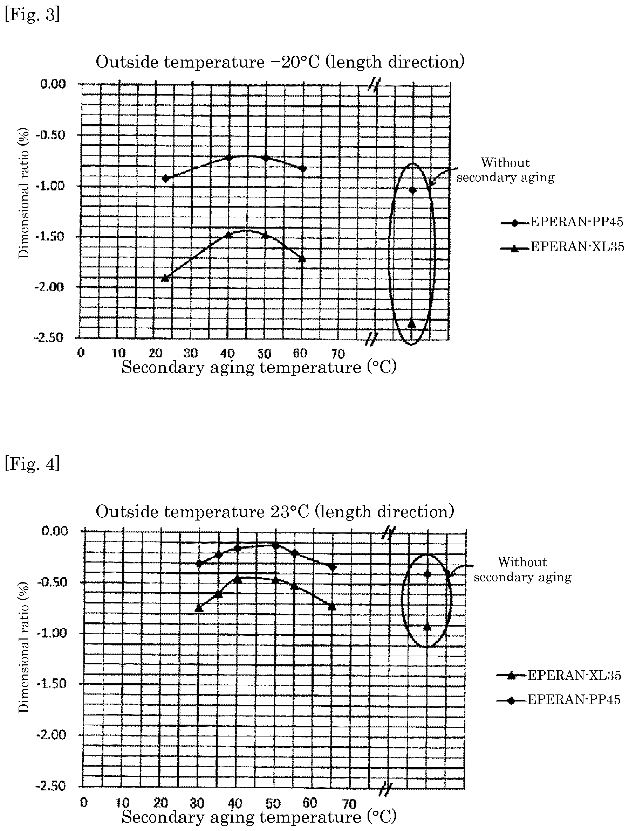

Fig. 1 shows the relation between the secondary aging temperature and the dimensional ratio based on Table 1 and Table 2, and Fig. 4 shows the relation between the secondary aging temperature and the dimensional ratio based on Table 1, Table 2, Table 7, and Table 8, where the outside air temperature is 23°C.

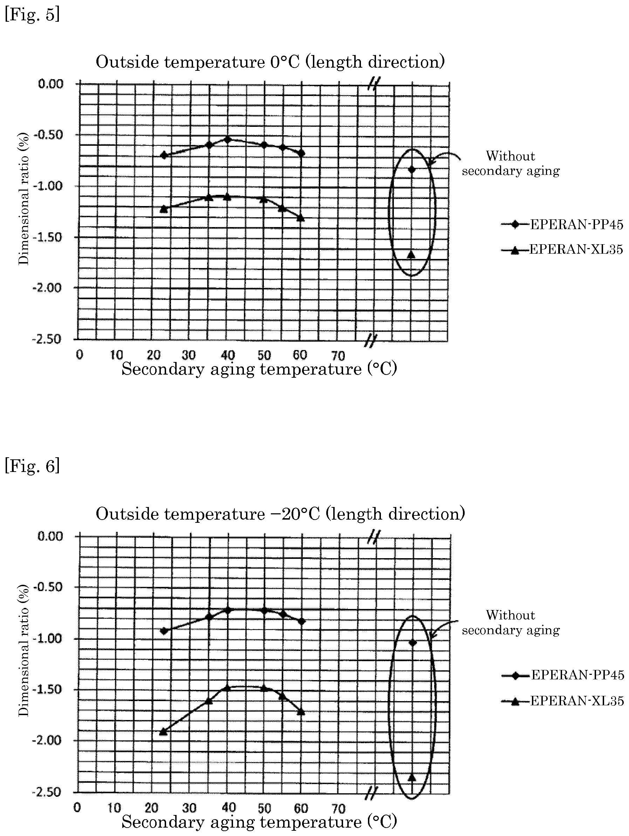

Fig. 2 shows the relation between the secondary aging temperature and the dimensional ratio based on Table 3 and Table 4, and Fig. 5 shows the relation between the secondary aging temperature and the dimensional ratio based on Table 3, Table 4, Table 7, and Table 8, where the outside environmental temperature is 0°C.

Fig. 3 shows the relation between the secondary aging temperature and the dimensional ratio based on Table 5 and Table 6, and Fig. 6 shows the relation between the secondary aging temperature and the dimensional ratio based on Table 5, Table 6, Table 7, and Table 8, where the outside environmental temperature is -20°C.

The results reveal that EPERAN-PP45 (polypropylene resin pre-foamed particles having an expansion ratio of 45) gave small dimensional ratios when no secondary aging was performed or the secondary aging was performed at a temperature of 23°C, 30°C, 60°C, or 65°C, but gave large dimensional ratios, or small shrinkage of the foam-molded article when the secondary aging temperature was 35 to 55°C.

The results also reveal that EPERAN-XL35 (polyethylene resin pre-foamed particles having an expansion ratio of 35) gave small dimensional ratios when no secondary aging was performed or the secondary aging was performed at a temperature of 23°C, 30°C, 60°C, or 65°C, but gave large dimensional ratios, or small shrinkage of the foam-molded article when the secondary aging temperature was 35 to 55°C.

As described above, the effect of suppressing the shrinkage is obviously achieved when the secondary aging is performed at an aging temperature of 35°C to 55°C at various outside environmental temperatures.

In addition, the effect by the secondary aging at 35°C to 55°C is more markedly achieved as the outside environmental temperature is lower.

**Claims**

1.  A method for manufacturing a polyolefin resin in-mold-foam-molded article, the article being molded by in-mold foam molding in which polyolefin resin pre-foamed particles are packed in a mold, thermally foamed and fused, the method comprising:

    subjecting the in-mold-foam-molded article after ejection from the mold to primary aging at 70°C or more and 85°C or less to restore a shape thereof; followed by
    subjecting the in-mold-foam-molded article to secondary aging at 35°C or more and 55°C or less, wherein the article is transferred as quickly as possible from an aging room controlled at the first aging temperature to another aging room controlled at the second aging temperature.

2.  The method for manufacturing a polyolefin resin in-mold-foam-molded article according to claim 1, wherein the primary aging is completed in a condition in which dimensions of the in-mold-foam-molded article are stabilized.

3. The method for manufacturing a polyolefin resin in-mold-foam-molded article according to claim 1 or 2, wherein the polyolefin resin pre-foamed particles are polyethylene resin pre-foamed particles or polypropylene resin pre-foamed particles.

4. The method for manufacturing a polyolefin resin in-mold-foam-molded article according to claim 3, wherein the polypropylene resin pre-foamed particles have an expansion ratio of 30 to 60, or the polyethylene resin pre-foamed particles have an expansion ratio of 18 to 60.

**Patentansprüche**

1. Ein Verfahren zur Herstellung eines in der Form schaumgeformten Polyolefinharzgegenstandes, wobei der Gegenstand durch Schaumformen in der Form geformt wird, wobei vorgeschäumte Polyolefinharzteilchen in eine Form gepackt, thermisch geschäumt und verschmolzen werden, wobei das Verfahren umfasst:

   Unterziehen des in der Form schaumgeformten Gegenstandes nach dem Auswerfen aus der Form einem primären Altern bei 70 °C oder mehr und 85 °C oder weniger, um seine Form wiederherzustellen; gefolgt von Unterziehen des in der Form schaumgeformten Gegenstandes einem sekundären Altern bei 35 °C oder mehr und 55 °C oder weniger, wobei der Gegenstand so schnell wie möglich von einem Alterungsraum, der auf der ersten Alterungstemperatur gehalten wird, zu einem anderen Alterungsraum, der auf der zweiten Alterungstemperatur gehalten wird, überführt wird.

2. Das Verfahren zur Herstellung eines in der Form schaumgeformten Polyolefinharzgegenstandes gemäß Anspruch 1, wobei das primäre Altern bei Bedingungen durchgeführt wird, bei denen die Abmessungen des in der Form schaumgeformten Gegenstandes stabilisiert werden.

3. Das Verfahren zur Herstellung eines in der Form schaumgeformten Polyolefinharzgegenstandes gemäß Anspruch 1 oder 2, wobei die vorgeschäumten Polyolefinharzteilchen vorgeschäumte Polyethylenharzteilchen oder vorgeschäumte Polypropylenharzteilchen sind.

4. Das Verfahren zur Herstellung eines in der Form schaumgeformten Polyolefinharzgegenstandes gemäß Anspruch 3, wobei die vorgeschäumten Polypropylenharzteilchen ein Expansionsverhältnis von 30 bis 60 aufweisen oder die vorgeschäumten Polyethylenharzteilchen ein Expansionsverhältnis von 18 bis 60 aufweisen.

**Revendications**

1. Méthode pour fabriquer un article en résine de polyoléfine, moulé par expansion en moule, l'article étant moulé par un moulage par expansion en moule dans lequel des particules pré-expansées de résine de polyoléfine sont tassées dans un moule, thermiquement expansées et fondues, la méthode comprenant :

   la soumission de l'article moulé par expansion en moule, après éjection hors du moule, à un vieillissement primaire à 70°C ou plus et 85°C ou moins pour rétablir la forme de celui-ci ; suivie de
   la soumission de l'article moulé par expansion en moule à un vieillissement secondaire à 35°C ou plus et 55°C ou moins,
   dans laquelle l'article est transféré aussi vite que possible d'une chambre de vieillissement régulée à la première température de vieillissement à une autre chambre de vieillissement régulée à la deuxième température de vieillissement.

2. Méthode pour fabriquer un article en résine de polyoléfine, moulé par expansion en moule, selon la revendication 1, dans laquelle le vieillissement primaire est complété dans une condition dans laquelle les dimensions de l'article moulé par expansion en moule sont stabilisées.

3. Méthode pour fabriquer un article en résine de polyoléfine, moulé par expansion en moule, selon la revendication 1 ou 2, dans laquelle les particules pré-expansées de résine de polyoléfine sont des particules pré-expansées de résine de polyéthylène ou des particules pré-expansées de résine de polypropylène.

4. Méthode pour fabriquer un article en résine de polyoléfine, moulé par expansion en moule, selon la revendication 3, dans laquelle les particules pré-expansées de résine de polypropylène ont un taux d'expansion de 30 à 60, ou les particules pré-expansées de résine de polyéthylène ont un taux d'expansion de 18 à 60.

[Fig. 1]

Outside temperature 23°C (length direction)

[Fig. 2]

Outside temperature 0°C (length direction)

[Fig. 3]

**Outside temperature −20°C (length direction)**

Without secondary aging

━◆━EPERAN-PP45
━▲━EPERAN-XL35

[Fig. 4]

**Outside temperature 23°C (length direction)**

Without secondary aging

━▲━EPERAN-XL35
━◆━EPERAN-PP45

[Fig. 5]

**Outside temperature 0°C (length direction)**

[Fig. 6]

**Outside temperature −20°C (length direction)**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S60166422 A
- JP 2000212320 A
- JP S6347128 A

- JP S6090744 A
- JP S51147567 A